## Europäisches Patentamt

## European Patent Office

## Office européen des brevets

(11) Publication number: **0 110 232**
**B1**

(12) **EUROPEAN PATENT SPECIFICATION**

(45) Date of publication of patent specification: **18.03.87**

(51) Int. Cl.⁴: **B 60 J 1/20,** B 62 D 35/00

(21) Application number: **83111388.1**

(22) Date of filing: **14.11.83**

(54) **Aerodynamical anti-soiling baffle of improved type for a rear window of a vehicle.**

(30) Priority: **25.11.82 IT 5399482 u**

(43) Date of publication of application:
**13.06.84 Bulletin 84/24**

(45) Publication of the grant of the patent:
**18.03.87 Bulletin 87/12**

(84) Designated Contracting States:
**DE FR GB**

(56) References cited:
**DE-A-3 116 628**
**FR-A-2 369 111**
**US-A-4 179 154**

(73) Proprietor: **FIAT AUTO S.p.A.**
**Corso Giovanni Agnelli 200**
**I-10135 Torino (IT)**

(72) Inventor: **Di Giusto, Nevio**
**Via Guarini, 48**
**I-10078 Venaria (Torino) (IT)**
Inventor: **Cornacchia, Felice**
**Corso Agnelli, 24**
**I-10100 Torino (IT)**

(74) Representative: **Bongiovanni, Guido et al**
**c/o Ingg. Carlo e Mario Torta Via Viotti 9**
**I-10121 Torino (IT)**

Courier Press, Leamington Spa, England.

## Description

The present invention relates to an aerodynamical anti-soiling baffle of improved type for the rear window of a vehicle.

It is known that the vehicles with a truncated tail (for example the two-box motor vehicles and/or the station wagon motor vehicles) have rear windows which are almost vertical or anyway little inclined (i.e. form with the lower vertical an angle of less than 45°) and which, because of the formation of vortexes and aerodynamical windages at the tail portion of the vehicle, are soiled during the travel on muddy or snow covered roads. This soiling is undesirable inasmuch as it is not only antiaesthetic, but also reduces and/or eliminates the rear visibility with the consequent danger of enhancing the accidents. The use of rear window wipers does not resolve the problem, because in this way only a limited zone of the rear window is cleaned. Therefore, aerodynamical baffles have been adopted, e.g. like that described in DE—A—3116628 and consisting of a fixed tab which is installed at a point corresponding to the rear side of the body ceiling of the vehicle, at a predetermined distance from the surface of this latter. In this way, the tab creates a "channel effect" which directs a flow of scavenging air tangentially with respect to the rear window, thereby removing the particles of dirt before they may settle on the surface of the rear window itself.

Baffles of this type have the disadvantage consisting in that they increase the aerodynamical resistance to the movement of the vehicle by about 10 to 15%, thus increasing the consumption of fuel and the costs of operation. This disadvantage results in being more serious, since the said devices, being fixed, act also when their action is not required, thus giving rise to a useless scavenging flow even in the absence of precipitations. The problem has partly been solved by means of the device described in FR—A—2 369 111, in which a curved baffle tab having a leading edge disposed parallel to the body ceiling at a predetermined distance from this latter, and a rear edge disposed parallel to the rear window at a predetermined distance from this latter is provided with means for moving the baffle tab from an extracted position, in which the said leading and rear edges are at the said predetermined distance from the said body ceiling and from the said rear window, to a retracted position in which the said leading edge is substantially tangential to the said body ceiling, and for moving the baffle tab from the said retracted position to the said extracted position.

Anyway, also this device is not free from the disadvantage of increasing the aerodynamical resistance to the movement when it is in operation (extracted position); furthermore, in the retracted position the aerodynamical resistance produced by the device is decreased, but not eliminated.

It is the object of the present invention to provide an aerodynamical anti-soiling baffle for the rear window in a vehicle, just the type described in FR—A—2 369 111 but free from the mentioned disadvantages. In particular, it is an object of the present invention to provide a baffle which will produce only a reduced increase of the aerodynamical resistance when in operation (extracted position) and which will produce substantially no increase of the aerodynamical resistance when inoperative (retracted position).

These objects are attained by the present invention which provides and aerodynamical anti-soiling baffle for the rear window of a vehicle, of the type adapted to be installed in a position corresponding to a rear side of a body ceiling of the said vehicle and comprising a curved baffle tab, a leading edge of which is disposed parallel to the said body ceiling and a rear edge of which is disposed parallel to the said rear window and comprising means for moving the said baffle tab from an extracted position, in which the said leading and rear edges are at a predetermined distance from the said body ceiling and from the said rear window, to a retracted position in which the said leading edge is substantially tangential to the said body ceiling, and for moving the said baffle tab from the said retracted position to the said extracted position, characterized in that said baffle tab has a substantially Y-shaped cross-section, and comprises, in addition to the said leading edge and the said first rear edge, a second rear edge lying in a plane substantially tangential to the said leading edge.

For a better understanding of the present invention, two non limiting embodiments thereof will now be described with reference to the annexed drawings, in which:

FIGURE 1 is a perspective view of a detail of a baffle according to the teachings of the present invention;

FIGURE 2 and 3 are diagrammatical representations of two different working positions of the detail shown in Fig. 1;

FIGURE 4 shows a baffle realized in accordance with the teachings of the present invention; and

FIGURE 5 shows a variant of the baffle shown in Fig. 4.

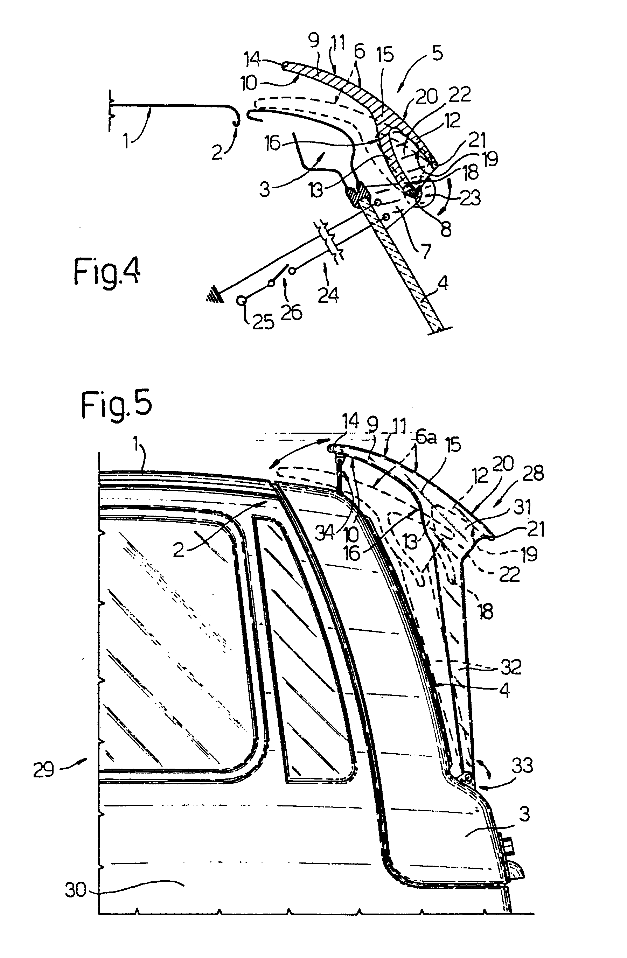

Referring to Fig. 4, there is diagrammatically illustrated a body ceiling 1 of a vehicle not shown, provided, at a position corresponding to a rear side 2 of the body ceiling 1, with a rear door 3, shown diagrammatically, having a transparent rear window 4. The door 3 is provided with an aerodynamical anti-soiling baffle 5 mounted in a position corresponding to the side 2 for protecting the rear window 4 during the travel of the vehicle and comprising a baffle tab 6 supported by two or more brackets 7, only one of which is shown, rigidly connected to the rear window 4 and/or to the door 3, and to which the tab 6 is hinged by means of a pin 8.

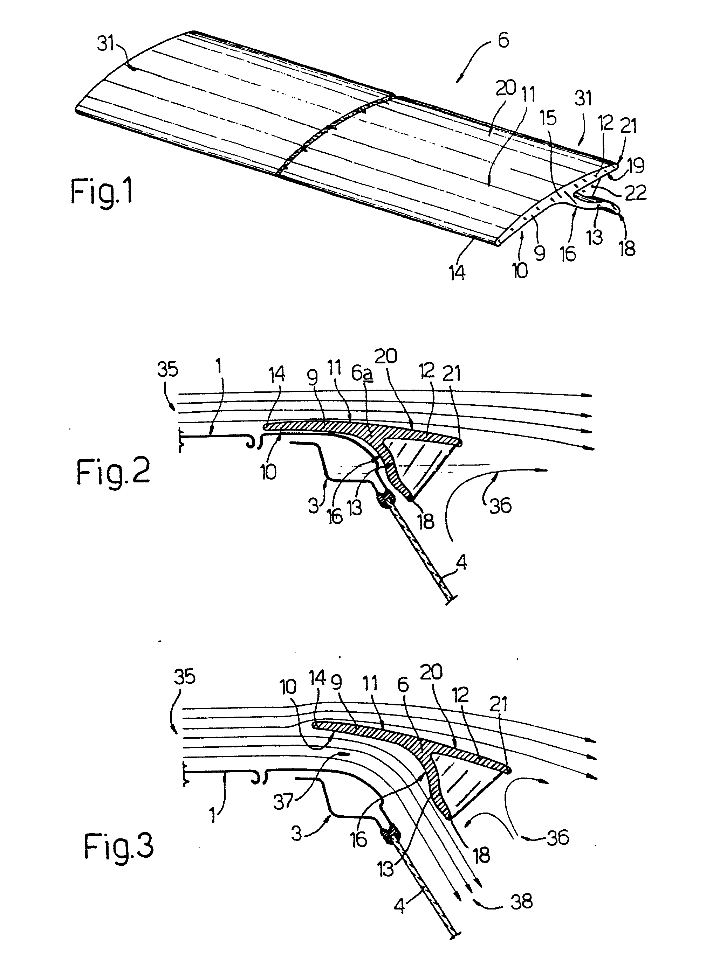

Referring also to Fig. 1, the tab 6 is disposed parallel to the side 2 in a position corresponding to this latter, is entirely supported by the door 3, is rectilinear and has a length substantially equal to the width of the body ceiling 1. Seen in cross-section perpendicularly to the side 2, the tab 6 has a substantially Y-shaped cross-section, comprising a substantially flat leading portion 9 extending towards the body ceiling 1 and defined by opposed curvilinear lower and upper surfaces 10 and 11, respectively, and two rear appendixes 12 and 13 which converge towards the base and form an acute angle between them. The leading portion 9 is provided with a rounded leading edge 14 of aerodynamical anchorage, towards which converge the opposed surfaces 10 and 11, and with a rear end 15; opposed to the edge 14, from which depart the two appendixes 12 and 13.

Appendix 13 extends beneath the portion 9 and is defined at the lower part by a curved surface 16, substantially parallel to the rear window 4, radiused to the surface 10; appendix 13 terminates with a rounded rectilinear rear edge 18 parallel to the rear window 4, which, according to the representation in Fig. 4, is hinged to the pin 8 so as to constrain the entire tab 6 to the brackets 7. Appendix 12 is delimited by curved opposed surfaces 19 and 20 lying in the same plane of the respective surfaces 10 and 11 and radiused to these latter without gaps; the surfaces 19 and 20 are convergent at the rear edge and terminate by forming a rounded rear edge 21 parallel to the edge 18 and lying in a plane substantially tangential to the leading edge 14. In order to increase the stiffness of the tab 6, appendixes 12 and 13 are connected to one another by means of a plurality of transversal ribs 22, only one of which is visible in Fig. 1. Preferably, tab 6 is formed by moulding, in one piece, in a synthetic plastic resin, so as to result in having a moderate weight.

The brackets 7 support, besides the tab 6, a motor or any other type of electric actuator 23 apt to rotate the tab 6 about the pin 8 in the direction indicated by the arrows in Fig. 4; the brackets 7 project perpendicularly from the rear window 4, so that the tab 6 is apt to rotate about an axis parallel to the side 2 and coinciding with the rear edge 18, i.e. with the axis of the pin 8. The motor 23 is controlled by the user of the vehicle by means of an electric circuit fed by a positive pole 25 and provided with a control switch 26 of any known type, disposed in a known and not shown manner inside the vehicle provided with the baffle 5, for example on the dashboard of the vehicle. By actuating the motor 23 the user can rotate the said tab 6 from inside the vehicle, displacing it from the position shown by a continuous line in Fig. 4, to the position shown by a dashed line in the said Fig. 4, or vice versa.

Fig. 5 shows a variant 28 of the baffle of Fig. 4. Parts similar or equal to those already described herein are indicated by the same reference numerals.

The baffle 28 shown in Fig. 5 is installed on a rear door 3 of a vehicle 29, in particular a motor vehicle, of which for the sake of simplicity only a rear portion 30 is shown. The door 3 is hinged parallel to the rear side 2 of the body ceiling 1 of the vehicle 29 and is provided with a rear window 4. The baffle 28 comprises a baffle tab 6a, completely similar in every detail to the tab 6 described in the foregoing, disposed parallel to the side 2 and supported by the door 3. The only difference between the tab 6a and the tab 6 consists in that the tab 6a has opposite terminal ends 31 which, contrariwise to the homonymous ends of the tab 6 shown in Fig. 1, are provided, in one piece, with respective lateral arms 32, angularly rigidly connected to the said ends 31 and, consequently, to the tab 6a, which arms are apt to be hinged in the lower part at 33 on the door 3 at the base of the rear window 4; in addition, the edge 18 of the appendix 13 of the tab 6a is free, since it is not hinged to any pin 8. In this way, the tab 6a of the baffle 28 may rotate in the direction of the arrows (Fig. 5) about an axis parallel to the side 2 and situated at the base of the rear window 4, between a first position shown by full lines in Fig. 5 and a second position shown by dashed lines in the same Figure. The displacement of the tab 6a can be carried out manually by the user, by loosening and then tightening again a stop device of a known type and not shown, situated at 33 and arranged to lock the arms 32 in any determined angular position relative to the rear window 4, or, preferably, is controlled by the user, in a known and not shown manner, from inside the vehicle 29, by means of a tie rod 34 supported by the door 3 and coming out from this latter in a position corresponding to its upper end; tie rod 34 may be controlled electrically by means of an actuator, not shown, installed inside the door 3, or mechanically ("bowden control").

In use, however the fastening and the control of the tab 6 (or 6a) are carried out. The baffle 5 (or 28) is apt to cause tab 6 or 6a, when controlled by the user, to assume two working positions shown in Figs. 2 and 3.

In Fig. 2 the tab 6a (or 6) is shown diagrammatically in a retracted position, corresponding to the position shown by the dashed lines in Figs. 4 and 5. In this retracted position the edge 14 is substantially tangential to the body ceiling 1 and, in the case of the tab 6a, whose rotation takes place at a point far from the rear edge 18, this latter results in being substantially tangential to the rear window 4. In this way, a flow of air 35 produced by the movement forward of the vehicle and movable parallelly to the ceiling 1 cannot penetrate beneath the tab 6 (or 6a), but is intercepted by the edge 14 and deflected along the upper surfaces 11 of the portion 9 and 20 of the appendix 12. Thanks to the configuration and orientation of this latter, the flow 35 is deflected far from the rear window 4 which has a limited inclination, thereby limiting the formation of vortexes 36 at the tail portion of the vehicle. I.e., appendix 12 acts in a manner analogous to that of negatively lifting baffles of known type, thus increasing the aerodynamical elongation of the vehicle, even when it has a truncated tail rear portion, thereby reducing the aerodynamical resistance to the travel of the vehicle.

In Fig. 3 the tab 6 (or 6a) is shown diagrammatically in an extracted or working position, corresponding to that shown by full lines in Figs. 4 and 5; in this position the edges 14 and 18 are disposed in the upper position and parallel to the body ceiling 1 and the rear window 4 at a predetermined distance from these latter, so as to define respective inlet and outlet edges of an aerodynamical channel 37 apt to separate from the flow 35 a scavenging flow 38, which is guided by the surfaces 10 and 16 and is deflected, thanks to the configuration and position of the appendix 13, into the rear window 4 tangentially to this latter. In this way, the flow 38, by lapping the rear window 4 prevents it from being soiled by removing the eventual contaminating particles which are present on the glass before they may deposit on this latter. At the same time, appendix 12 continues to perform an aerodynamical action of detaching a part of the flow 35 from the surface of the body ceiling 1 thereby moving it away from the rear window 4 and thus reducing the formation of vortexes 36. In this extracted position the formation of vortexes 36 is increased relative to the retracted position shown in Fig. 2, and consequently there is obtained an increase of the aerodynamical resistance to the advancement of the vehicle, but thanks to the appendix 12 the said increase is of a minimum value and undoubtedly much smaller than that which would generated by a fixed baffle of conventional type. Experimental tests have proved that such resistance increase is in the order of 2 to 5%, i.e. decidedly lower than the value of 10 to 15% which is reached at the present time.

Therefore, when the weather conditions are good, the user operates the controls 26 or 34 so as to cause the tab 6 (or 6a, respectively) to rotate about the pin 8 (or 33, respectively) so as to bring it to the retracted position of Fig. 2. In this position there is no increase of the aerodynamical resistance due to the presence of the baffle 5 (or 28), but on the contrary, if the appendix 12 is well profiled, a reduction of the resistance to the advancement of the vehicle is obtained. In case of adverse weather conditions which render it necessary to clean the rear window 4, the user rotates the tab 6 (or 6a) by operating the controls 26 or 34 and brings it to the extracted position shown in Fig. 3. In this position a scavenging flow 28 is formed which laps the rear window 4, whilst the appendix 12 allows to keep within minimum values the unavoidable increase of resistance to the advancement of the vehicle.

It is obvious that the baffle tab can be mounted by any means and in any manner other than those described hereinabove by way of examples, and can be actuated by means of different devices, or automatically, by means of a suitable sensor. Moreover, the baffle described hereinabove may be mounted not only on two-box vehicles, but also on three-box vehicles; in this case it is installed directly on the body ceiling of the vehicle and avoids the soiling of the rear window which, in such vehicles, cannot be provided with a wiper.

**Claims**

1. An aerodynamical anti-soiling baffle (5, 28) for a rear window (4) of a vehicle, of the type adapted to be installed in a position corresponding to a rear side (2) of a body ceiling (1) of the said vehicle and comprising a curved baffle tab (6, 6a), a leading edge (14) of which is disposed parallel to the said body ceiling (1) and a rear edge (18) of which is disposed parallel to the said rear window (4) and comprising means (7, 8; 23, 32, 33, 34) for moving the said baffle tab (6, 6a) from an extracted position, in which the said leading and rear edges (14 and 18, respectively) are at a predetermined distance from the said body ceiling (1) and from the said rear window (4), to a retracted position in which the said leading edge (14) is substantially tangential to the said body ceiling (1), and for moving the said baffle tab (6, 6a) from the said retracted position to the said extracted position, characterized in that said baffle tab (6, 6a) has a substantially Y-shaped cross-section, and comprises, in addition to the said leading edge (14) and the said first rear edge (18), a second rear edge (21) lying in a plane substantially tangential to the said leading edge (14).

2. An aerodynamical anti-soiling baffle (5, 28) as claimed in Claim 1, characterized in that the said baffle tab (6, 6a) has a length substantially equal to the width of the said body ceiling (1), and is disposed parallel to the said rear side (2) of this latter.

3. An aerodynamical anti-soiling baffle (5, 28) as claimed in Claim 2, characterized in that the said baffle tab (6, 6a) comprises a substantially flat portion (9) defined by curvilinear opposed surfaces (10, 11) and provided with the said leading edge (14), a first rear appendix (13) extending beneath the said leading portion (9), defined by a curved surface (16) radiused to a lower surface (10) of this latter and provided with the said first rear edge (18), and a second rear appendix (12) defined by curved opposed surfaces (19, 20) lying in the same plane of the said upper curved surfaces (10, 11) of the said leading portion (9) to which they are radiused, and provided with the said second rear edge (21); the said first (13) and second (12) appendixes being mutually connected by means of a plurality of transversal stiffening ribs (22).

4. An aerodynamical anti-soiling baffle (5, 28) as claimed in any of the preceding Claims, characterized in that the said baffle tab (6, 6a) is made of synthetic plastic resin.

5. An aerodynamical anti-soiling baffle (28) as claimed in any of the preceding Claims, characterized in that in the said retracted position the said first rear edge (18) is substantially tangential to the said rear window (4).

6. An aerodynamical anti-soiling baffle (28) as claimed in any of the preceding Claims, characterized in that the said means for displacing the said baffle tab (6a) comprise at least a lateral arm (32) angularly rigidly connected to an end (31) of the said tab (6a) and hinged at a position corresponding to the base (33) of the said rear window (4), so that the said tab (6a) is apt to rotate about an axis parallel to the said rear side (2) of the said body ceiling (1).

7. An aerodynamical anti-soiling baffle as claimed in any of Claims 1 to 4, characterized in that the said means for displacing the said baffle tab (6) comprise brackets (7) rigidly fixed to the said rear window (4) and projecting perpendicularly therefrom, the said first rear edge (18) of the said tab (6) being hinged to the said brackets (7), in such a way that the said tab (6) is apt to rotate about an axis parallel to the said rear side (2) of the said body ceiling (1) and coinciding with the said first rear edge (18).

8. An aerodynamical anti-soiling baffle (5, 28) as claimed in any of Claims 6 and 7, characterized in that the said means for displacing the said tab (5, 6a) comprise moreover a control device (24, 34) arranged to be actuated by a user to rotate the said tab (6, 6a) about the said axis.

9. An aerodynamical anti-soiling baffle (28) as claimed in Claim 8, characterized in that the said control device comprises at least a tie rod (34) actuable from inside the vehicle.

10. An aerodynamical anti-soiling baffle (5) as claimed in Claims 8 or 9, characterized in that the said control device (24) comprises an electric actuator (23) apt to rotate the said tab (6).

11. An aerodynamical anti-soiling baffle (5, 28) as claimed in any of the preceding Claims, characterized in that the said baffle tab (6, 6a) is supported by a rear door (3) of the said vehicle (29), provided with the said rear window (4).

**Patentansprüche**

1. Stromlinienförmiger, wind- und schmutzabweisender Flügel (5, 28) für ein Heckfenster eines Fahrzeuges, von der Art um in der der hinteren Seitenwand (2) des Wagendaches (1) entsprechenden Position installiert zu werden und mit einem gebogenen windabweisenden Flügel (6, 6a) dessen Vorderkante (14) zum Wagendach und dessen Hinterkante (18) parallel zum Heckfenster verläuft und Mittel (7, 8, 23, 32, 33, 34) besitzt, um diesen windabweisenden Flügel (6, 6a) von einer ausgezogenen Stellung, in der sich die Vorder- und Hinterkante (14, 18) in einem vorbestimmten Abstand vom Wagendach (1) befindet vom Heckfenster (4) in eine eingezogene Stellung zu bringen in der die Vorderkante (14) im wesentlichen zum Wagendach (1) tangential verläuft und um den windabweisenden Flügel (6, 6a) aus der eingezogenen in die ausgezogene Stellung zu bringen, dadurch gekennzeichnet dass der Flügel (6, 6a) im wesentlichen Y-förmig ist und zusätzlich an der Vorder- und Hinterkante (14, 18) eine zweite Hinterkante (21) aufweist, die sich im wesentlichen in einer tangential verlaufenden Ebene zur Vorderkante (18) befindet.

2. Stromlinienförmiger, wind- und schmutzabweisender Flügel (5, 28) nach Anspruch 1, dadurch gekennzeichnet dass der windabweisende Flügel (6, 6a) im wesentlichen eine Länge aufweist, die gleich der Breite des Wagendaches (1) ist und parallel zur Seitenfläche (2) verläuft.

3. Stromlinienförmiger, wind- und schmutzabweisender Flügel (5, 28) nach Anspruch 2, dadurch gekennzeichnet dass der windabweisende Flügel (6, 6a) einen im wesentlichen aus gegenüberliegenden Flächen (10, 11) bestehenden flachen Abschnitt (9) mit Vorderkante (14) umfasst, wo ein erster Hinteransatz (13) sich unter den Vorderabschnitt (9) erstreckt und von einer gebogenen Fläche (16) begrenzt ist, die in eine untere Fläche (10) derselben übergeht und die erste Hinterkante (18) sowie einen zweiten von den gegenüberliegenden gebogenen Flächen (19, 20) gebildeten Hinteransatz (12) aufweist, der in derselben Ebene der oberen gebogenen Flächen (10, 11) des Vorderabschnittes (9) liegt in die sie übergehen, sowie mit der zweiten Hinterkante (21) versehen, wo der erste und zweite Ansatz (13, 12) untereinander durch eine Anzahl von Versteifungsquerrippen (22) verbunden sind.

4. Stromlinienförmiger, wind- und schmutzabweisender Flügel (5, 28) nach irgendeinem der vorhergehenden Ansprüche, dadurch gekennzeichnet dass der windabweisende Flügel aus Kunststoff besteht.

5. Stromlinienförmiger, wind- und schmutzabweisender Flügel (5, 28) nach irgendeinem der vorhergehenden Ansprüche, dadurch gekennzeichnet dass die erste Hinterkante (18) bei eingefahrener Syellung tangential zum Heckfenster (4) verläuft.

6. Stromlinienförmiger, wind- und schmutzabweisender Flügel (28) nach irgendeiner der vorhergehenden Ansprüche, dadurch gekennzeichnet dass das Verstellungsmittel des windabweisenden Flügels mindestens einen Seitenarm (32) aufweist der winkelig mit einem Ende (31) des Flügels (6a) fest verbunden ist und in einer Grundstellung des Heckfensters (4) so klappbar ist, dass der Flügel (6a) um eine Achse parallel zur Seitenwand (2) des Wagendaches (1) dreht.

7. Stromlinienförmiger, wind- und schmutzabweisender Flügel nach irgendeiner der vorhergehenden Ansprüche 1—4, dadurch gekennzeichnet dass das Verstellungsmittel des windabweisenden Flügels (6), Bügel (7) aufweist die fest mit dem Heckfenster (4) verbunden sind und senkrecht von diesem abstehen, während die erste Hinterkante (18) des Flügels (6) so an die Bügel (7) angebracht ist, dass der Flügel (6) sich um eine Achse parallel zur Seitenwand (2) des Wagendaches (1) drehen kann und mit der ersten Hinterkante (18) zusammenfällt.

8. Stromlinienförmiger, wind- und schmutzabweisender Flügel (5, 28) nach irgendeinem der vorhergehenden Ansprüche 6 und 7, dadurch gekennzeichnet dass das Verstellungsmittel für den Flügel (6, 6a) ausserdem eine Betätigungsvorrichtung (24, 34) aufweist, mit der der Anwender den Flügel (6, 6a) um die Achse rotieren kann.

9. Stromlinienförmiger, wind- und schmutzabweisender Flügel (28) nach Anspruch 8, dadurch gekennzeichnet dass die Betätigungsvorrichtung mindestens eine vom Wageninnern betätigbare Zugstange aufweist.

10. Stromlinienförmiger, wind- und schmutzabweisender Flügel (5) nach den Ansprüchen 8 bzw. 9, dadurch gekennzeichnet dass die Betätigungsvorrichtung einen elektrischen Trieb (23) aufweist um den Flügel (6) zu rotieren.

11. Stromlinienförmiger, wind- und schmutzabweisender Flügel (5, 28) nach irgendeiner der vorhergehenden Ansprüche, dadurch gekennzeichnet dass der Flügel (6, 6a) durch die Hecktüre des Fahrzeuges (29), das das Heckfenster (4) besitzt, abgestützt wird.

**Revendications**

1. Déflecteur aérodynamique anti-salissures (5, 28) pour une vitre arrière (4) d'un véhicule, du type adapté pour être installé dans une position correspondant à un côté arrière (2) du toit (1) de la carrosserie du véhicule et comprenant un volet déflecteur incurvé (6, 6a), dont le bord d'attaque (14) est disposé parallèlement au toit (1) du véhicule et un bord de fuite (18) est disposé parallèlement à la vitre arrière (4) et comporte des moyens (7, 8, 23; 32, 33, 34) pour déplacer le volet déflecteur (6, 6a) depuis une position sortie, dans laquelle les bords d'attaque et de fuite (respectivement 14 et 18) se trouvent à une distance prédéterminée respectivement du toit (1) de la carrosserie et de la vitre arrière (4) jusqu'à une position rentrée dans laquelle le bord d'attaque (14) est pratiquement tangent au toit (1) de la carrosserie, et pour déplacer le volet déflecteur (6, 6a) de la position rentrée à la position sortie, caractérisé en ce que le volet déflecteur (6, 6a) a une section transversale pratiquement en forme de Y et comprend, outre le bord d'attaque (14) et le premier bord de fuite (18), un deuxième bord de fuite (21) disposé dans un plan pratiquement tangent au bord d'attaque (14).

2. Déflecteur aérodynamique anti-salissures (5; 28) selon la revendication 1, caractérisé en ce que le volet déflecteur (6, 6a) a une longueur pratiquement égale à la largeur du toit (1) de la carrosserie et est disposé parallèlement au côté arrière (2) de ce dernier.

3. Déflecteur aérodynamique anti-salissures (5, 28) selon la revendication 2, caractérisé en ce que le volet déflecteur (6, 6a) comporte une portion pratiquement plate (9) définie par des surfaces opposées curvilignes (10, 11) et comportant le bord d'attaque (14), un premier appendice arrière (13) s'étendant en dessous de la portion antérieure (9), défini par une surface courbe (16) se raccordant par un rayon à la surface inférieure (10) de cette portion antérieure et comportant le premier bord de fuite (18), et un deuxième appendice arrière (12) défini par des surfaces opposées incurvées (19, 20) situées dans le même plan que les surfaces courbes supérieures (10, 11) de cette portion antérieure (9) auxquelles elles se raccordent, et comportant le deuxième bord de fuite (21), le premier (13) et le deuxième (12) appendice étant reliés l'un à l'autre au moyen d'une multiplicité de nervures de renforcement transversales (22).

4. Déflecteur aérodynamique anti-salissures (5, 28) selon l'une quelconque des revendications précédentes, caractérisé en ce que le volet déflecteur (6, 6a) est en résine plastique synthétique.

5. Déflecteur aérodynamique anti-salissures (28) selon l'une quelconque des revendications précédentes, caractérisé en ce que, dans la position rentrée, le premier bord de fuite (18) est pratiquement tangent à la vitre arrière (4).

6. Déflecteur aérodynamique anti-salissures (28) selon l'une quelconque des revendications précédentes, caractérisé en ce que les moyens pour déplacer le volet déflecteur (6a) comprend au moins un bras latéral (32) solidarisé angulairement d'une extrémité (31) du volet (6a) et articulé en une position correspondant à la base (33) de la vitre arrière (4), de sorte que ce volet (6a) peut tourner autour d'un axe parallèle au côté arrière (2) du toit (1) de la carrosserie.

7. Déflecteur aérodynamique anti-salissures selon l'une quelconque des revendications 1 à 4, caractérisé en ce que les moyens pour déplacer le volet déflecteur (6) comportent des ferrures (7) solidaires de la vitre arrière (4) et s'en projetant perpendiculairement, le premier bord de fuite (18) du volet (6) étant articulé sur ces ferrures (7) de telle manière que le volet (6) peut tourner autour d'un axe parallèle au côté arrière (2) du toit (1) de la carrosserie et coïncidant avec le premier bord de fuite (18).

8. Déflecteur aérodynamique anti-salissures (5, 28) selon l'une quelconque des revendications 6 et 7, caractérisé en ce que les moyens pour déplacer le volet (6, 6a) comportent en outre un dispositif de commande (24, 34) agencé pour être actionné par un utilisateur pour faire tourner le volet (6, 6a) autour de son axe.

9. Déflecteur aérodynamique anti-salissures (28) selon la revendication 8, caractérisé en ce que le dispositif de commande comporte au moins une biellette (34) pouvant être actionnée de l'intérieur du véhicule.

10. Déflecteur aérodynamique anti-salissures (5) selon l'une des revendications 8 ou 9, caractérisé en ce que le dispositif de commande (24) comporte un actionneur électrique (23) pouvant faire tourner le volet (6).

11. Déflecteur aérodynamique anti-salissures (5, 28) selon l'une quelconque des revendications précédentes, caractérisé en ce que le volet déflecteur (6, 6a) est supporté par le hayon arrière (3) du véhicule (29), équipé de la vitre arrière (4).

0 110 232

Fig.1

Fig.2

Fig.3

1

# 0 110 232

Fig.4

Fig.5